# EUROPÄISCHE PATENTANMELDUNG

(11) **EP 1 593 534 A1**
(43) Veröffentlichungstag der Anmeldung: **09.11.2005**
(21) Anmeldenummer: 04291172.7
(22) Anmeldetag: 06.05.2004
(51) Int. Cl.: B60H 1/00, B60H 1/24

(54) **Gebläseordnung mit Regler**

(71) Anmelder: Behr France Rouffach SAS, 68250 Rouffach (FR)
(72) Erfinder: Peter, Vincent, 68190 Ensisheim (FR)
(74) Vertreter: Grauel, Andreas

(57) **Zusammenfassung**

Die Erfindung betrifft eine Gebläseanordnung (1), insbesondere für ein Kraftfahrzeug, bei der ein gemeinsamer Regler (6) für mehrere Gebläse (2, 2') vorgesehen ist.

## Beschreibung

Die Erfindung betrifft eine Gebläseanordnung mit Regler, insbesondere für ein Kraftfahrzeug, gemäß dem Oberbegriff des Anspruchs 1.

Bei bekannten Klimaanlagen für ein Kraftfahrzeug ist teilweise eine zusätzliche Klimaanlage und/oder ein Booster-Gebläse erforderlich, um eine geforderte Temperaturverteilung zu erreichen. Hierbei sind in der Regel mehrere Gebläse erforderlich, wobei jedes Gebläse einen Regler aufweist.

Eine derartige Gebläseanordnung mit Regler lässt jedoch noch Wünsche offen.

Es ist Aufgabe der Erfindung, eine verbesserte Gebläseanordnung zur Verfügung zu stellen.

Diese Aufgabe wird gelöst durch eine Gebläseanordnung mit den Merkmalen des Anspruchs 1. Vorteilhafte Ausgestaltungen sind Gegenstand der Unteransprüche.

Erfindungsgemäß ist eine Gebläseanordnung vorgesehen, die einen gemeinsamen Regler für mehrere Gebläse aufweist. Dabei erfolgt die Regelung insbesondere über die Spannungsversorgung.

Bevorzugt ist mindestens ein Gebläse ein Booster-Gebläse, das in einem Luftkanal angeordnet ist und die Luft insbesondere dem Fondbereich ohne große Temperaturänderungen zuführt.

Vorzugsweise sind die verschiedenen Gebläse verschiedenen Klimaanlagen zugeordnet, d.h. insbesondere der normalen Klimaanlage für den Frontbereich und einer Heck-Klimaanlage für den Fondbereich. Dies ermöglicht eine optimale Temperierung des Fahrzeuginnenraums.

Im Folgenden wird die Erfindung anhand von fünf Ausführungsbeispielen unter Bezugnahme auf die Zeichnung im Einzelnen erläutert. In der Zeichnung zeigen:
- Fig. 1: eine schematische Darstellung einer erfindungsgemäßen Gebläseanordnung,
- Fig. 2: eine Draufsicht auf ein Kraftfahrzeug mit zwei Klimaanlagen gemäß dem ersten Ausführungsbeispiel,
- Fig. 3: eine Draufsicht auf ein Kraftfahrzeug mit einer Klimaanlage mit zwei Booster-Gebläsen gemäß dem zweiten Ausführungsbeispiel,
- Fig. 4: eine Draufsicht auf ein Kraftfahrzeug mit einer Klimaanlagen mit einem Booster-Gebläse gemäß dem dritten Ausführungsbeispiel, und
- Fig. 5: eine Draufsicht auf ein Kraftfahrzeug mit einer Klimaanlage mit einem Booster-Gebläse gemäß dem vierten Ausführungsbeispiel.

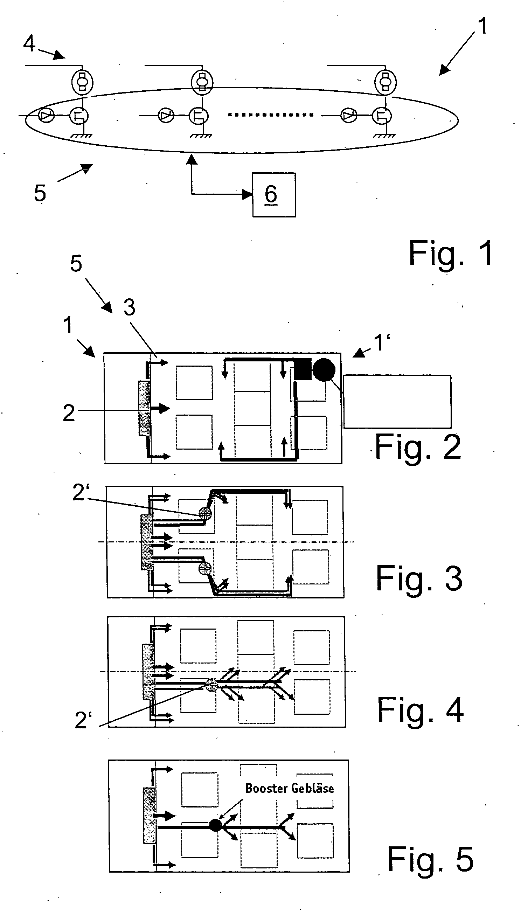

Eine Kraftfahrzeug-Klimaanlage 1 weist zur Zuleitung zum und Verteilung der Luft im Fahrzeuginnenraum eine Mehrzahl von Gebläsen 2 auf, welche in Luftkanälen 3 angeordnet sind, wobei jedes Gebläse 2 von einem ElektroMotor 4 angetrieben wird. Dabei wird auf die Gebläse 2 mit ihrem Motor 4 in Verbindung mit den entsprechenden Luftkanälen 3 als Gebläseanordnung 5 Bezug genommen. Erfindungsgemäß ist zur Regelung sämtlicher Motoren 4 der Gebläse 2 ein gemeinsamer Regler 6 vorgesehen, wie in Fig. 1 angedeutet, wobei auch andere elektrische Komponenten der Gebläse 2 gemeinsam ausgebildet sein können.

Fig. 2 zeigt als erstes Ausführungsbeispiel eine Gebläseanordnung 5, welche die von zwei Klimaanlagen 1, 1' kommende Luft auf den Fahrzeuginnenraum verteilt, wofür ein Regler 6 für die Gebläse 2 vorgesehen ist. Hierbei wird die temperierte Luft über jeweils ein Gebläse 2, d.h. insgesamt zwei Gebläse 2, dem Fahrzeuginnenraum zugeführt.

Gemäß dem in Fig. 3 dargestellten, zweiten Ausführungsbeispiel sind getrennte Warm/Kalt-Luftkanäle 3 vorgesehen, wobei je Luftkanal-Strang ein Booster-Gebläse 2' zur Unterstützung des Klimaanlagen-Gebläses 2 vorgesehen ist, so dass die temperierte Luft auch den Fondbereich schnell erreicht.

In Abwandlung von Fig. 3 ist gemäß dem dritten, in Fig. 4 dargestellten Ausführungsbeispiel nur ein etwa mittig angeordneter Luftkanal-Strang vorgesehen, in dem ein Booster-Gebläse 2' die Funktion des Klimaanlagen-Gebläses 2 unterstützt.

Fig. 5 zeigt als drittes Ausführungsbeispiel eine Abwandlung des vierten Ausführungsbeispiels, bei dem die Mischung der Luft bereits im Bereich der Klimaanlage 1 erfolgt und daher ein gemeinsamer Luftkanal 3 mit einem Booster-Gebläse 2' vorgesehen ist.

## Patentansprüche

1. Gebläseanordnung, insbesondere für ein Kraftfahrzeug, **dadurch gekennzeichnet, dass** ein gemeinsamer Regler (6) für mehrere Gebläse (2, 2') vorgesehen ist.

2. Gebläseanordnung nach Anspruch 1, **dadurch gekennzeichnet, dass** der Regler (6) die Spannungsversorgung der einzelnen Gebläse (2, 2') regelt.

3. Gebläseanordnung nach Anspruch 1 oder 2, **dadurch gekennzeichnet, dass** mindestens ein Gebläse ein Booster-Gebläse (2') ist.

4. Gebläseanordnung nach einem der vorhergehenden Ansprüche, **dadurch gekennzeichnet, dass** die Gebläse (2, 2') verschiedenen Klimaanlagen (1, 1') zugeordnet sind.

5. Verfahren zum Regeln einer Gebläseanordnung (1), insbesondere einer Kraftfahrzeug-Klimaanlage (1) gemäß einem der Ansprüche 1 bis 4, wobei ein zentraler Regler (6) mehrere Gebläse (2, 2') regelt.

6. Verfahren nach Anspruch 5, **dadurch gekennzeichnet, dass** die Regelung über die Spannungsversorgung der einzelnen Gebläse (2, 2') zentral über den Regler (6) erfolgt.
